# FASCICULE DE BREVET EUROPEEN

(11) **EP 1 499 869 B1**
(45) Date de publication et mention de la délivrance du brevet: **26.04.2006**
(21) Numéro de dépôt: 03700798.6
(22) Date de dépôt: 10.02.2003
(51) Int. Cl.: G01N 1/28

(54) **DISPOSITIF POUR LA REALISATION D'UNE PREPARATION CYTOLOGIQUE SUR UNE LAME PORTE-OBJET**
VORRICHTUNG ZUR DURCHFÜHRUNG EINER ZYTOLOGISCHEN VORBEREITUNG AUF EINEM OBJEKTTRÄGER
DEVICE FOR PRODUCING A CYTOLOGICAL PREPARATION ON AN OBJECT-CARRYING SLIDE

(30) Priorité: 24.04.2002 CH 700022002
(43) Date de publication de la demande: 26.01.2005
(73) Titulaire: JLC Consultants Sàrl, 1052 Le Mont (CH)
(72) Inventeur: Centeleghe,Jean-Luc Alphagenics International Sarl, CH-1052 Le Mont-sur-Lausanne (CH); Balli, Lorenzo c/o Alphagenics International Sarl, CH-1052 Le Mont-sur-Lausanne (CH)
(74) Mandataire: Grosfillier, Philippe
(86) Numéro de dépôt international: PCT/CH2003/000097
(87) Numéro de publication internationale: WO 2003/091704

(56) Documents cités:
- EP-A- 0 743 524
- EP-A- 0 857 961
- WO-A-98/53297
- US-A- 4 395 493
- US-A- 5 143 627
- US-A- 5 269 918
- US-A- 5 301 685
- US-A1- 2001 032 821

## Description

### Domaine de l'invention

La présente invention se rapporte à un dispositif pour la réalisation d'une préparation cytologique sur une lame porte-objet à partir d'un échantillon se trouvant sous forme de suspension de cellules. Le dispositif comprend un récipient destiné à contenir une suspension de cellules, le fond dudit récipient étant connecté à un système d'aspiration/filtration comprenant une membrane filtrante, un support pour ladite membrane et des moyens d'aspiration.

### Etat de la technique

Un dispositif de la sorte précitée sert à automatiser la réalisation d'une préparation cytologique sur une lame porte-objet à partir d'un échantillon se trouvant sous forme de suspension de cellules, tout en améliorant sa qualité. En effet, une telle préparation n'a de valeur pour l'observation au microscope que si les cellules sont disposées sur la lame de façon adéquate, c'est-à-dire qu'elles sont séparées les une des autres en nombre suffisant mais pas excessif et qu'elles ne sont pas abîmées.
Les suspensions de départ présentant une grande variation dans la concentration de cellules (cellules/ml), il est utile de disposer d'un dispositif s'adaptant à cette concentration pour fournir des préparations de qualité.

Le brevet US 4 395 493 de COULTER ELECTRONICS, INC. présente un dispositif pour la réalisation d'une préparation cytologique sur une lame porte-objet à partir d'un échantillon se trouvant sous forme de suspension de cellules.

Le dispositif comprend une source de pression qui est destinée à induire un flux de la suspension d'un premier récipient en direction d'un second récipient, le parcours étant muni d'un compteur de cellules. Lorsque le second récipient reçoit ladite suspension de cellules, il est disposé en contact avec une fraction d'un rouleau de membrane filtrante. Pendant ce temps un vide est appliqué à travers le filtre pour ne retenir sur ce dernier que le filtrat. Une fois la suspension filtrée, la fraction du rouleau chargée de filtrat est déplacée en direction d'une presse qui transfert ledit filtrat du rouleau de membrane filtrante vers une lame porte-objet.

Ce dispositif complexe présente le désavantage de présenter plusieurs éléments conduisant la suspension entre le premier récipient et la membrane filtrante recevant le filtrat. Ceci a pour conséquence une contamination de tous ces éléments lors d'une préparation cytologique. De ce fait le nettoyage entre chaque préparation cytologique doit être très important, ce qui nécessite du temps et de grands moyens.

Le brevet US 5 143 627 de CYTYC CORPORATION présente un dispositif pour la réalisation d'une préparation cytologique sur une lame porte-objet à partir d'un échantillon se trouvant sous forme de suspension de cellules. Le dispositif comprend un dispositif de filtration qui immerge dans la suspension de cellules.

Ce dispositif étant d'une part contraint à subir un nettoyage important entre chaque préparation, ceci étant dû à la complication de fonctionnement dudit dispositif, il est d'autre part prévu pour les laboratoires d'analyse ayant régulièrement un grand nombre d'échantillons à préparer. En effet, ce dispositif étant relativement complexe, il est d'un prix élevé.

La demande de brevet européen EP 743 524 de COSTAR ITALIA S.r.l. présente également un dispositif pour la réalisation d'une préparation cytologique sur une lame porte-objet à partir d'un échantillon se trouvant sous forme de suspension de cellules.

Malgré que ce dispositif ressemble grossièrement par sa simplicité et son arrangement au dispositif de la présente invention, il n'est quant à lui pas assez élaboré pour la réalisation de lames porte-objets constantes et de qualité. En effet il ne permet par exemple pas la filtration d'une fraction prédéfinie d'une suspension de cellules, ce qui oblige l'opérateur à pipeter la quantité exacte qu'il désire utiliser pour la préparation. D'autre part ce dispositif ne divulgue aucun système de transfert du filtrat de la membrane filtrante vers la lame porte-objet, le transfert se faisant essentiellement de manière manuelle, ce qui n'est pas un gage de qualité et de constance.

### Résumé de l'invention

La présente invention a le mérite de remédier notamment aux problèmes précités en offrant un dispositif simple permettant la mise à disposition à prix modéré d'un dispositif fonctionnel pour des laboratoires de petite à moyenne envergure.

Plus précisément l'invention se rapporte à un dispositif selon la revendication 1 pour la réalisation d'une préparation cytologique sur une lame porte-objet à partir d'un échantillon se trouvant sous forme de suspension de cellules.

L'opérateur chargé de la réalisation d'une préparation cytologique observe l'échantillon reçu sous forme de suspension de cellules. Selon le degré d'opacité de la suspension, qui correspond à la concentration cellulaire de l'échantillon, il définit la fraction de la suspension destinée à être préparée. Ainsi, par exemple, si la suspension est normale (claire ou légèrement trouble), il définit une fraction de 6 ml. Si la suspension est très opaque (densité cellulaire trop importante), il définit une fraction de 3 ml.

Le dispositif selon l'invention peut comprendre un système pivotant constitué de manière à permettre un pivotement du récipient et/ou de la membrane filtrante.
Le pivotement du récipient, ensemble avec la membrane filtrante, sert à récupérer le surplus de suspension après aspiration/filtration de la fraction prédéfinie de suspension. La suspension peut être récupérée dans le flacon original qui contenait l'échantillon à analyser ; de ce fait d'autres analyses peuvent être effectuées sur le même échantillon. D'autres moyens de récupération de la suspension par basculement du récipient peuvent être prévus.

Le système pivotant peut en outre permettre le transfert du filtrat contenu sur la membrane filtrante vers la lame porte-objet. Ce moyen supplémentaire permet la réalisation de préparations constantes et de qualité, considérant que le transfert manuel du filtrat sur une lame porte-objet est fortement dépendant du travail de l'opérateur. Ainsi, par exemple, certaines cellules seront abîmées si l'opérateur effectue un mouvement latéral lorsque la membrane filtrante touche la lame porte-objet.

Le dispositif selon l'invention peut comprendre un support porte-lame disposé de manière à ce que la membrane soit positionnée dessus suite à son basculement.

Le dispositif selon l'invention peut en outre disposer de moyens d'injection d'air pour décoller la membrane de son support et/ou adhérer la membrane sur une lame se trouvant sur le support de lame porte-objet une fois que la membrane est positionnée sur le support de lame porte-objet.

Une masse peut être prévue pour presser le filtrat de la suspension sur une lame disposée sur le support de lame porte-objet. Cet élément permet une meilleure adhésion du filtrat à la lame. Des moyens peuvent également être prévus pour appliquer cette masse sur la lame selon une durée prédéfinie et pour retirer la masse automatiquement une fois ladite durée terminée.

Ces moyens sont utiles pour décharger l'opérateur qui ne doit ainsi pas être présent pour chronométrer la durée nécessaire et retirer la masse. La durée préréglée se situe avantageusement aux alentours de 20 secondes.

La masse peut comprendre une partie détachable de manière à pouvoir utiliser le cas échéant une plus faible masse. Il a en effet été constaté que la masse pour l'élaboration d'une préparation optimale se situe aux alentours de 150 g pour les préparations gynécologiques et autour de 50 g pour les autres préparations.

Le récipient, élément de l'invention, est de préférence de forme tronconique, sa section diminuant en direction du fond, le fond comprenant une ouverture bordée sur sa face externe d'un renflement destiné à assurer un contact étanche entre le récipient et le système d'aspiration.
Il a en effet été constaté qu'une forme légèrement tronconique permet un meilleur écoulement de la suspension en direction de l'ouverture présente sur le fond du récipient.
D'autre part ledit renflement destiné à assurer un contact étanche entre le récipient et le système d'aspiration présente une amélioration par rapport au récipient de la demande de brevet européen EP 743 524 de COSTAR ITALIA S.r.l..

Un système d'acheminement de produit fixatif dans le récipient peut être prévu dans le présent dispositif. Ainsi la préparation cytologique obtenue est prête à l'emploi dès que le transfert du filtrat vers la lame porte-objet a eu lieu.

L'ensemble de dispositifs peuvent être disposés sur un même appareil.

Le dispositif ou ensemble peut être compris dans un boîtier muni d'un couvercle.

La réalisation d'une préparation cytologique sur une lame porte-objet à partir d'un échantillon se trouvant sous forme de suspension de cellules est obtenu par le procédé selon la revendication 13 qui comprend une étape lors de laquelle une suspension est versée dans un récipient puis aspirée/filtrée à travers une membrane filtrante disposée sur un support via une ouverture disposée sur le fond du récipient, ledit procédé étant caractérisé en ce que l'on aspire/filtre une fraction prédéfinie de la suspension de cellules contenue dans le récipient.

Préalablement à l'aspiration/filtration, un produit fixatif peut être introduit dans la suspension contenue dans le récipient.

Suite à l'aspiration/filtration le récipient peut être pivoté et son contenu récupéré dans des moyens de récupération.

Après avoir ôté le récipient, la membrane peut être pivotée de manière à se positionner sur une lame porte-objet se trouvant sur son support.

Pour décoller la membrane de son support et/ou adhérer la membrane sur la lame, on peut procéder à l'injection d'air.

Ensuite une masse peut être appliquée pendant une durée prédéfinie sur la membrane afin d'améliorer son adhérence sur la lame ; la masse peut être automatiquement retirée une fois la durée prédéfinie terminée.
Par ailleurs l'activation de la masse peut enclencher le nettoyage du support de membrane.

Un mode de réalisation préféré est décrit ci-dessous plus en détail pour une meilleure compréhension/illustration de l'invention. Ce mode de réalisation ne limite pourtant en rien l'étendue de l'invention.

### Brève description des figures

Un mode de réalisation non-limitatif de l'invention est décrit ci-après au moyen des figures suivantes :
Les figures 1, 2, 3 et 4 illustrent une vue en perspective du dispositif selon l'invention à différentes étapes de son fonctionnement.
Les figures 5, 6 et 7 illustrent une vue de face des moyens pour appliquer la masse sur la lame porte-objets.
Les figures 8 et 9 illustrent une vue en perspective du récipient destiné à contenir une suspension de cellules. La figure 8 illustre une vue de dessus alors que la figure 9 illustre une vue de dessous montrant le fond du récipient.

Chaque élément commun à chaque figure porte la même référence numérique.

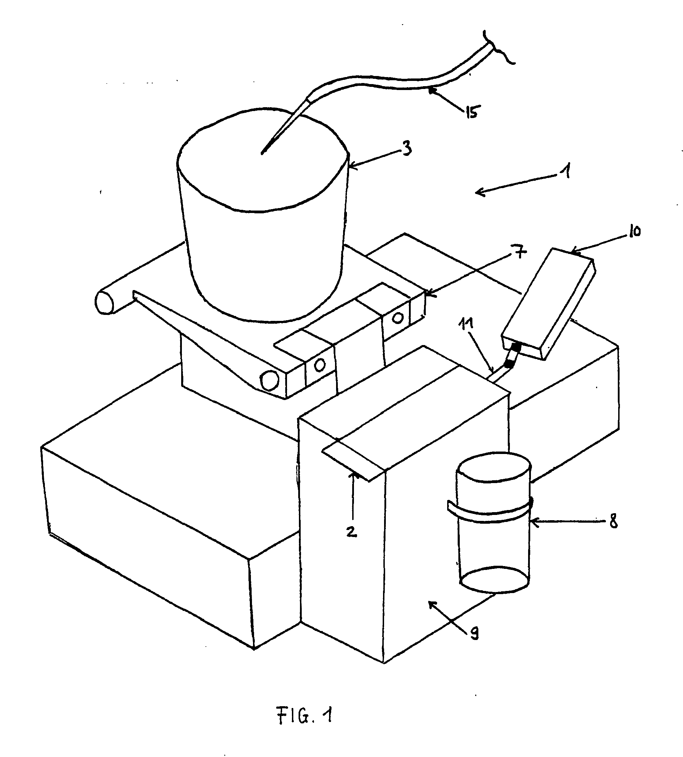

La figure 1 illustre le dispositif (1) selon l'invention comprenant une lame porte-objets (2) posée sur un support de lame porte-objets (9). Un moyen de récupération de la suspension (8) est fixé sur une face dudit support (9). Le dispositif comprend en outre une masse (10) et des moyens pour appliquer la masse (11) sur la lame porte-objets (2). Un système pivotant (7) permet le pivotement du récipient (3) et/ou de la membrane filtrante (non-visible sur cette figure). Le dispositif est doté d'un système d'acheminement de produit fixatif (15). Cette figure illustre l'étape lors de laquelle une suspension de cellules peut être versée dans le récipient (3) pour être aspirée/filtrée à travers une membrane filtrante (non-visible sur cette figure).

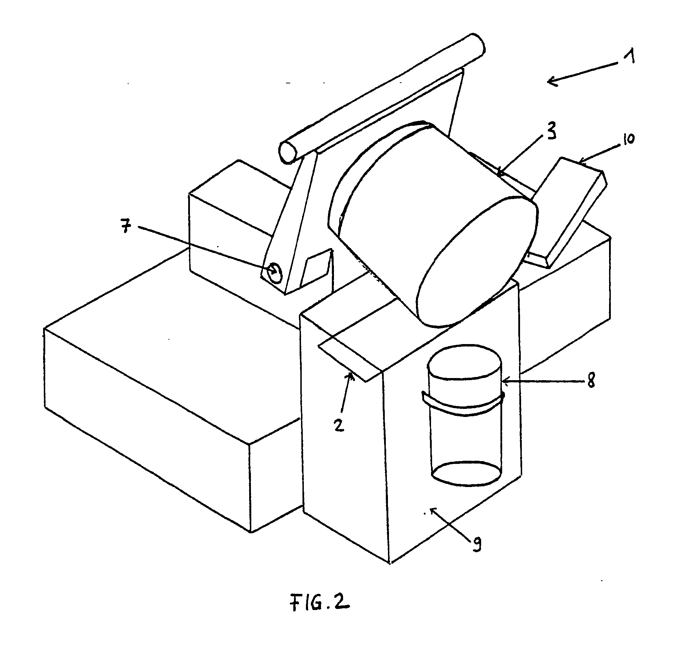

La figure 2 illustre le dispositif (1) selon l'invention pendant l'étape de pivotement du récipient (3) après aspiration/filtration de la suspension. Cette étape a pour but la récupération du contenu du récipient dans des moyens de récupération (8).

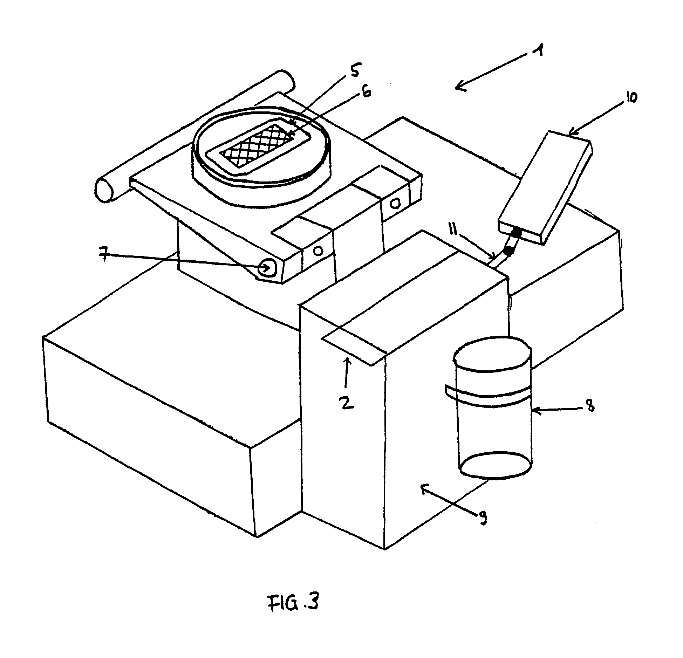

La figure 3 illustre le dispositif (1) selon l'invention pendant l'étape suivante lors de laquelle le récipient (3) vide a été ôté et le système pivotant (7) ramené à l'horizontale. La membrane filtrante (5) et son support (6) sont maintenant visibles.

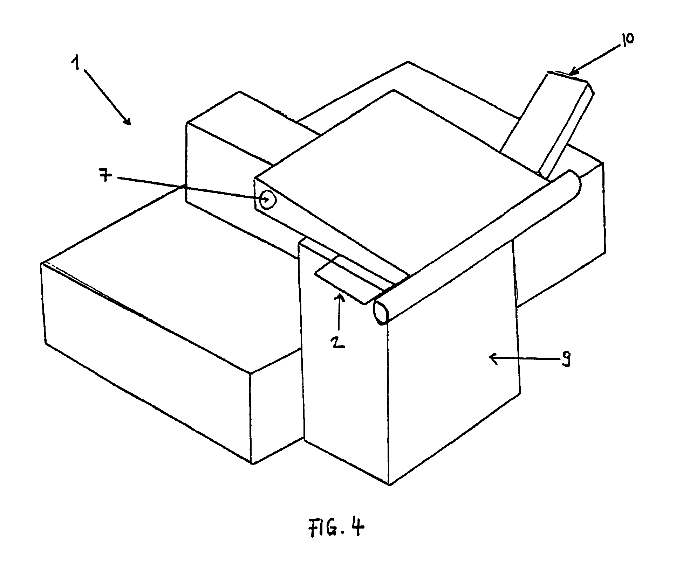

La figure 4 illustre le dispositif (1) selon l'invention pendant l'étape suivante lors de laquelle la membrane filtrante (non-visible sur cette figure) est pivotée à l'aide du système pivotant (7) de manière à se positionner sur le support de lame porte-objets (9).
A ce stade, de l'air est injecté pour décoller la membrane de son support et/ou adhérer la membrane sur la lame.

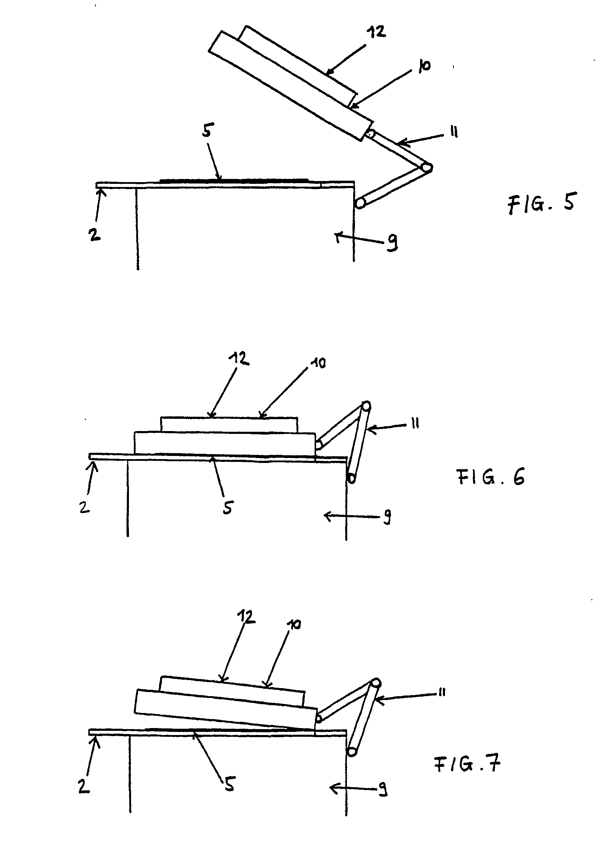

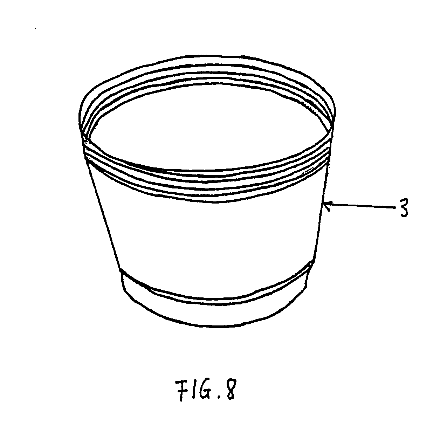

Les figures 5 à 7 illustrent l'étape suivante qui consiste en l'application pendant une durée définie d'une masse (10) sur la membrane (5). La figure 5 représente la position avant l'application de la masse, la figure 6 pendant l'application de la masse et la figure 7 après le retirement automatique de la masse. La masse peut être dotée d'une partie détachable (12).

La figure 8 illustre le récipient (3) tronconique selon l'invention.

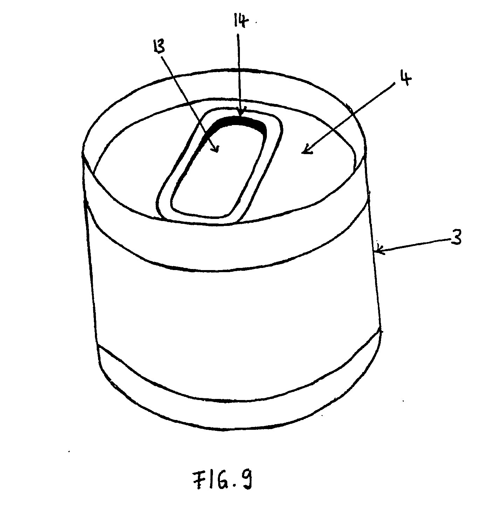

La figure 9 illustre le récipient (3) selon l'invention comprenant un fond (4) doté d'une ouverture (13) bordée sur sa face externe d'un renflement (14).

## Revendications

1. Dispositif (1) pour la réalisation d'une préparation cytologique sur une lame porte-objet (2) à partir d'un échantillon se trouvant sous forme de suspension de cellules, ledit dispositif comprenant un récipient (3) destiné à contenir une suspension de cellules, le fond (4) dudit récipient étant connecté à un système d'aspiration/filtration comprenant une membrane filtrante (5), un support (6) pour ladite membrane et des moyens d'aspiration,
**caractérisé en ce qu'**il comprend des moyens pour aspirer/filtrer au travers de la membrane une fraction prédéfinie d'une suspension de cellules contenue dans le récipient, ladite fraction correspondant à la quantité destinée à être préparée.

2. Dispositif selon la revendication 1 comprenant un système pivotant (7) constitué de manière à permettre un pivotement du récipient et/ou de la membrane filtrante.

3. Dispositif selon la revendication précédente comprenant des moyens de récupération (8) de la suspension qui sont disposés de manière à récupérer la suspension contenue dans le récipient lors du basculement de celui-ci.

4. Dispositif selon la revendication 2 ou 3 comprenant un support de lame porte-objet (9) disposé de manière à ce que la membrane soit positionnée dessus suite à son basculement.

5. Dispositif selon la revendication précédente comprenant des moyens d'injection d' air pour décoller la membrane de son support et/ou adhérer la membrane sur une lame se trouvant sur le support de lame porte-objet une fois que la membrane est positionnée sur le support de lame porte-objet.

6. Dispositif selon l'une quelconque des revendications 4 ou 5 comprenant une masse (10) pour presser le filtrat de la suspension sur une lame disposée sur le support de lame porte-objet.

7. Dispositif selon la revendication précédente comprenant des moyens pour appliquer la masse (11) sur une lame selon une durée prédéfinie et pour retirer la masse automatiquement une fois ladite durée terminée.

8. Dispositif selon la revendication 6 ou 7 **caractérisé en ce que** la masse comprend une partie détachable (12) de manière à pouvoir utiliser le cas échéant une plus faible masse.

9. Dispositif selon l'une quelconque des revendications précédentes, **caractérisé en ce** le récipient (3) est de forme tronconique, sa section diminuant en direction du fond (4), le fond comprenant une ouverture (13) bordée sur sa face externe d'un renflement (14) destiné à assurer un contact étanche entre le récipient et le système d'aspiration.

10. Dispositif selon l'une quelconque des revendications précédentes comprenant un système d'acheminement de produit fixatif (15) dans le récipient.

11. Ensemble de dispositifs selon l'une quelconque des revendications précédentes disposés sur un même appareil.

12. Dispositif ou ensemble selon l'une quelconque des revendications précédentes compris dans un boîtier muni d'un couvercle.

13. Procédé pour la préparation d'une préparation cytologique sur une lame porte-objet (2) à partir d'un échantillon se trouvant sous forme de suspension de cellules, le procédé comprenant une étape lors de laquelle une suspension est versée dans un récipient (3) puis aspirée/filtrée à travers une membrane filtrante (5) disposée sur un support (6) via une ouverture (13) disposée sur le fond (4) du récipient, ledit procédé étant **caractérisé en ce que** l'on aspire/filtre une fraction prédéfinie de la suspension de cellules contenue dans le récipient, ladite fraction correspondant à la quantité destinée à être préparée.

14. Procédé selon la revendication précédente **caractérisé en ce que** suite à l'étape d'aspiration/filtration, le récipient (3) est pivoté et son contenu récupéré dans des moyens de récupération (8).

15. Procédé selon la revendication précédente **caractérisé en ce que** la membrane filtrante (5) est pivotée de manière à se positionner sur un support de lame porte-objets (9).

16. Procédé selon la revendication précédente **caractérisé en ce que** l'on injecte de l'air pour décoller la membrane (5) de son support (6) et/ou adhérer la membrane sur une lame (2) se trouvant sur le support de lame porte-objets (9).

17. Procédé selon la revendication précédente **caractérisé en ce que** l'on applique pendant une durée prédéfinie une masse (10) sur la membrane (5) afin d'améliorer son adhérence sur la lame (2) et qu'une fois la durée prédéfinie terminée, la masse est automatiquement retirée.

18. Procédé selon la revendication précédente **caractérisé en ce que** l'activation de la masse enclenche le nettoyage du support de membrane (6).

19. Procédé selon l'une quelconque des revendications 13 à 18 **caractérisé en ce que** préalablement à l'étape d'aspiration/filtration, on introduit un produit fixatif dans la suspension contenue dans le récipient.

## Claims

1. Device (1) for producing a cytological preparation on an object-carrying slide (2) from a sample in the form of a suspension of cells, said device comprising a receptacle (3) for holding a suspension of cells, the base (4) of said receptacle being connected to a suction/filtration system comprising a filtering membrane (5), a support (6) for said membrane and suction means, **characterized in that** it comprises means for suctioning/filtering through the membrane a predetermined fraction of a suspension of cells held in the receptacle, said fraction corresponding to the amount intended to be prepared.

2. Device according to Claim 1, comprising a pivoting system (7) constituted so as to allow the receptacle and/or the filtering membrane to pivot.

3. Device according to the preceding claim, comprising means for recovering (8) the suspension, which are arranged so as to recover the suspension held in the receptacle when said receptacle is tipped.

4. Device according to Claim 2 or 3, comprising an object-carrying slide support (9) arranged such that the membrane is positioned over it once it has been tipped.

5. Device according to the preceding claim, comprising means for injecting air in order to detach the membrane from its support and/or to attach the membrane to a slide which is on the object-carrying slide support, once the membrane is positioned on the object-carrying slide support.

6. Device according to either one of Claims 4 and 5, comprising a mass (10) for pressing the filtrate of the suspension onto a slide placed on the object-carrying slide support.

7. Device according to the preceding claim, comprising means (11) for applying the mass onto a slide for a predetermined period of time and for removing the mass automatically once said period of time has come to an end.

8. Device according to Claim 6 or 7, **characterized in that** the mass comprises a detachable component (12) so as to be able to use, where appropriate, a lighter mass.

9. Device according to any one of the preceding claims, **characterized in that** the receptacle (3) is of frustoconical shape, its cross section decreasing towards the base (4), the base comprising an opening (13) bordered on its external face by a protrusion (14) intended to ensure a leak-tight contact between the receptacle and the suction system.

10. Device according to any one of the preceding claims, comprising a system for conveying a fixing product (15) into the receptacle.

11. Set of devices according to any one of the preceding claims, arranged on the same piece of apparatus.

12. Device or set according to any one of the preceding claims, included in a box equipped with a cover.

13. Process for preparing a cytological preparation on an object-carrying slide (2) from a sample in the form of a suspension of cells, the process comprising a step during which a suspension is poured into a receptacle (3) and then suctioned/filtered through a filtering membrane (5) placed on a support (6) via an opening (13) placed on the base (4) of the receptacle, said process being **characterized in that** a predetermined fraction of the suspension of cells held in the receptacle is suctioned/filtered, said fraction corresponding to the amount intended to be prepared.

14. Process according to the preceding claim, **characterized in that**, subsequent to the suction/filtration step, the receptacle (3) is pivoted and its contents recovered in recovering means (8).

15. Process according to the preceding claim, **characterized in that** the filtering membrane (5) is pivoted so as to be positioned on an object-carrying slide support (9).

16. Process according to the preceding claim, **characterized in that** air is injected in order to detach the membrane (5) from its support (6) and/or to attach the membrane to a slide (2) which is on the object-carrying slide support (9).

17. Process according to the preceding claim, **characterized in that** a mass (10) is applied to the membrane (5) for a predetermined period of time in order to improve its adhesion to the slide (2) and that, once the predetermined period of time has come to an end, the mass is automatically removed.

18. Process according to the preceding claim, **characterized in that** the activation of the mass triggers the cleaning of the membrane support (6).

19. Process according to any one of Claims 13 to 18, **characterized in that**, prior to the suction/filtration step, a fixing product is introduced into the suspension held in the receptacle.

## Patentansprüche

1. Vorrichtung (1) zur Herstellung eines zytologischen Präparates auf einem Objektträger (2) ausgehend von einer in Form einer Zellsuspension vorliegenden Probe, wobei die Vorrichtung einen Behälter (3) umfasst, der dazu bestimmt ist, eine Zellsuspension zu enthalten, wobei der Boden (4) des Behälters mit einem Ansaug-/Filtrationssystem verbunden ist, das eine Filtermembran (5), eine Auflage (6) für die Membran und Ansaugmittel umfasst,
**dadurch gekennzeichnet, dass** sie Mittel zum Ansaugen/Filtern eines vordefinierten Bruchteils einer in dem Behälter enthaltenen Zellsuspension durch die Membran hindurch umfasst, wobei der Bruchteil der Menge entspricht, die präpariert werden soll.

2. Vorrichtung nach Anspruch 1, welche ein schwenkbares System (7) umfasst, das so beschaffen ist, dass es eine Schwenkung des Behälters und/oder der Filtermembran ermöglicht.

3. Vorrichtung nach dem vorhergehenden Anspruch, welche Mittel zur Rückgewinnung (8) der Suspension umfasst, die so angeordnet sind, dass die in dem Behälter enthaltene Suspension bei der Kippbewegung desselben zurückgewonnen wird.

4. Vorrichtung nach Anspruch 2 oder 3, welche eine Objektträgerabstützung (9) umfasst, die so angeordnet ist, dass sich die Membran nach ihrer Kippbewegung auf ihr befindet.

5. Vorrichtung nach dem vorhergehenden Anspruch, welche Mittel zum Einspritzen von Luft umfasst, um die Membran von ihrer Auflage zu lösen und/oder die Membran auf einen auf der Objektträgerabstützung befindlichen Objektträger zu kleben, wenn sich die Membran auf der Objektträgerabstützung befindet.

6. Vorrichtung nach einem der Ansprüche 4 oder 5, welche eine Masse (10) umfasst, um das Filtrat der Suspension auf einen auf der Objektträgerabstützung befindlichen Objektträger zu pressen.

7. Vorrichtung nach dem vorhergehenden Anspruch, welche Mittel zum Drücken der Masse (11) während einer vordefinierten Zeitdauer auf einen Objektträger und zum automatischen Zurückziehen der Masse nach Ablauf der Zeitdauer umfasst.

8. Vorrichtung nach Anspruch 6 oder 7, **dadurch gekennzeichnet, dass** die Masse einen abtrennbaren Teil (12) umfasst, derart, dass gegebenenfalls eine kleinere Masse verwendet werden kann.

9. Vorrichtung nach einem der vorhergehenden Ansprüche, **dadurch gekennzeichnet, dass** der Behälter (3) kegelstumpfförmig ist, wobei sich sein Querschnitt in Richtung des Bodens (4) verkleinert, wobei der Boden eine Öffnung (13) umfasst, die an ihrer Außenseite von einer Verstärkung (14) eingefasst ist, die dazu bestimmt ist, einen dichten Kontakt zwischen dem Behälter und dem Ansaugsystem sicherzustellen.

10. Vorrichtung nach einem der vorhergehenden Ansprüche, welche ein System zur Einleitung von Fixiermittel (15) in den Behälter umfasst.

11. Gesamtheit von Vorrichtungen nach einem der vorhergehenden Ansprüche, die an ein und demselben Gerät angeordnet sind.

12. Vorrichtung oder Gesamtheit nach einem der vorhergehenden Ansprüche, die in einem mit einer Abdeckung versehenen Gehäuse enthalten ist.

13. Verfahren zur Herstellung eines zytologischen Präparates auf einem Objektträger (2) ausgehend von einer in Form einer Zellsuspension vorliegenden Probe, wobei das Verfahren einen Schritt umfasst, in welchem eine Suspension in einen Behälter (3) gegossen und anschließend durch eine auf einer Auflage (6) angeordnete Filtermembran (5) hindurch durch eine im Boden (4) des Behälters angeordnete Öffnung (13) angesaugt/gefiltert wird, wobei das Verfahren **dadurch gekennzeichnet ist, dass** ein vordefinierter Bruchteil der in dem Behälter enthaltenen Zellsuspension angesaugt/gefiltert wird, wobei der Bruchteil der Menge entspricht, die präpariert werden soll.

14. Verfahren nach dem vorhergehenden Anspruch, **dadurch gekennzeichnet, dass** nach dem Schritt des Ansaugens/Filterns der Behälter (3) geschwenkt und sein Inhalt in Mitteln zur Rückgewinnung (8) zurückgewonnen wird.

15. Verfahren nach dem vorhergehenden Anspruch, **dadurch gekennzeichnet, dass** die Filtermembran (5) so geschwenkt wird, dass sie in eine Position auf einer Objektträgerabstützung (9) gelangt.

16. Verfahren nach dem vorhergehenden Anspruch, **dadurch gekennzeichnet, dass** Luft eingespritzt wird, um die Membran (5) von ihrer Auflage (6) zu lösen und/oder die Membran auf einen auf der Objektträgerabstützung (9) befindlichen Objektträger (2) zu kleben.

17. Verfahren nach dem vorhergehenden Anspruch, **dadurch gekennzeichnet, dass** eine Masse (10) während einer vordefinierten Zeitdauer auf die Membran (5) gedrückt wird, um deren Haftung auf dem Objektträger (2) zu verbessern, und dass, nachdem die vordefinierte Zeitdauer abgelaufen ist, die Masse automatisch zurückgezogen wird.

18. Verfahren nach dem vorhergehenden Anspruch, **dadurch gekennzeichnet, dass** die Betätigung der Masse die Reinigung der Membranauflage (6) auslöst.

19. Verfahren nach einem der Ansprüche 13 bis 18, **dadurch gekennzeichnet, dass** vor dem Schritt des Ansaugens/Filterns ein Fixiermittel in die in dem Behälter enthaltene Suspension eingeleitet wird.
